# EUROPÄISCHE PATENTSCHRIFT

(11) **EP 1 523 876 B1**
(45) Veröffentlichungstag und Bekanntmachung des Hinweises auf die Patenterteilung: **22.11.2006**
(21) Anmeldenummer: 04023725.7
(22) Anmeldetag: 05.10.2004
(51) Int. Cl.: A01D 75/18

(54) **Förderer mit einer Metalldetektionseinrichtung**
Conveyor with a metal detecting device
Transporteur avec dispositif de détection de métal

(30) Priorität: 15.10.2003 DE 10348659
(43) Veröffentlichungstag der Anmeldung: 20.04.2005
(73) Patentinhaber: CLAAS Selbstfahrende Erntemaschinen GmbH, 33428 Harsewinkel (DE)
(72) Erfinder: Brune, Markus, 33428 Marienfeld (DE); Behnke, Willi, 33803 Steinhagen (DE)

(56) Entgegenhaltungen:
- EP-A1- 0 666 021
- DE-A1- 4 301 611
- US-A- 5 901 534

## Beschreibung

Die Erfindung betrifft einen Förderer mit einer Metalldetektionseinrichtung zum Detektieren von Metallteilen in einem zu fördernden Gut, insbesondere in einem Erntegut, mit einer Magnetanordnung zum Erzeugen eines Mess-Magnetfelds, durch welches das zu fördernde Gut bewegt wird, mit einer Sensoranordnung, welche eine Veränderung des Mess-Magnetfelds registriert und einer Signalauswerteinrichtung, welche ein bei einer Magnetfeldänderung von der Sensoranordnung ausgegebenes Signal zur Erkennung eines Metallteils im zu fördernden Gut auswertet. Darüber hinaus betrifft die Erfindung eine Erntemaschine, welche einen derartigen Förderer aufweist, sowie ein entsprechendes Verfahren zum Detektieren von Metallteilen in einem zu fördernden Gut.

Förderer der eingangs genannten Art mit Metalldetektionseinrichtung werden in der Regel in Erntemaschinen, insbesondere in selbstfahrenden Erntemaschinen wie z. B. Feldhäckslern, eingesetzt, um evtl. gemeinsam mit dem Erntegut in die Maschine eingedrungene Metallkörper - z. B. einen Wenderzinken, einen Weidezaunpfahl, eine Dose oder einen Nagel - zu erkennen und in diesem Fall die Maschinen automatisch abzuschalten. Ein solcher Förderer ist aus der US-A-5 901 534 bekannt. Dadurch soll verhindert werden, dass die Metallteile Schäden in der Maschine verursachen oder später beim Verfüttern des Ernteguts von den Tieren aufgenommen werden und zu Verletzungen oder sogar zum Tod von Tieren führen können. Bei einem typischen Aufbau besteht ein solcher Förderer aus einem oder mehreren hintereinander geschalteten Einzugswalzenpaaren. Erntegut, das von einem Erntevorsatzgerät der Erntemaschine kommt, wird zwischen den Walzen eingezogen und beispielsweise zu einer Häckseltrommel oder einem anderen Arbeitsaggregat weiterbefördert. Die Metalldetektionseinrichtung ist dabei üblicherweise innerhalb einer der vorderen Einzugswalzen ortsfest gelagert. Der Erfassungsbereich der Metalldetektionseinrichtung wird von einem von der Magnetanordnung erzeugten Mess-Magnetfeld gebildet. Das Mess-Magnetfeld ist dabei vorzugsweise in etwa senkrecht von unten in den Erntegutstrom bzw. oft auch schräg nach vorne in Richtung des Erntevorsatzgeräts ausgerichtet. Das Mess-Magnetfeld ist von der Stärke her so gewählt, dass es zumindest einen Großteil der Erntegutschicht durchdringt. Die Magnetanordnung besteht dabei meist aus einer Vielzahl von quer zur Gutflussrichtung angeordneten Dauermagneten.

Gelangt ein Metallteil, bei dem es sich um ein ferromagnetisches Störelement handelt, in diesen Detektionsbereich, wird das Magnetfeld partiell verstärkt. Diese Magnetfeldveränderung wird von der Sensoranordnung registriert. Die Sensoranordnung weist dabei üblicherweise mehrere Sensorelemente auf. In der Regel handelt es sich hierbei um Spulen, in welche durch die Veränderung des Mess-Magnetfelds ein Signal induziert wird. Grundsätzlich sind aber auch andere Magnetfeldsensoren, beispielsweise Hallsensoren, verwendbar. Das von der Sensoranordnung ausgegebene Signal wird dann einer Signalauswerteinrichtung zugeführt, welche das Signal auswertet, um zu erkennen, ob die Magnetfeldänderung durch ein Metallteil im zu fördernden Gut verursacht wurde. In dieser Auswerteschaltung wird beispielsweise das Signal verstärkt, ggf. digitalisiert, gefiltert und ein Schwellwert gesetzt. Bei Überschreiten des gesetzten Schwellwerts wird z. B. ein Ausgangssignal erzeugt, das dann an eine Schnellstoppeinrichtung für die gesamte Maschine bzw. das Einzugsaggregat, d.h. an den Förderer, weitergeleitet wird. Innerhalb einer sehr kurzen Zeit, bevor das Metallteil ein dem Förderer nachgeordnetes Arbeitsaggregat - beispielsweise beim Feldhäcksler die Häckseltrommel - erreicht hat, wird die Maschine bzw. der Förderer stillgesetzt. Sobald die Maschine gestoppt wird, muss der Bediener den Förderer in Auswurfrichtung laufen lassen und das Erntegut wieder auswerfen und durchsuchen, um das Metallteil zu entfernen. Hierdurch werden Beschädigungen an den nachfolgenden Arbeitsaggregaten sowie eine Verunreinigung des Ernteguts durch Metallteile wirkungsvoll verhindert.

Die Einbaulage der Metalldetektionseinrichtung bedingt jedoch Störungen, die zu Fehlauslösern der Metalldetektionseinrichtung führen können. Der Metalldetektor ist zwar innerhalb der Einzugswalze vor Beschädigungen und Verschleiß geschützt angeordnet, jedoch befinden sich im Detektionsbereich bewegte Teile, die zu einer Veränderung des Detektionsverhaltens und zu Fehlauslösungen führen können. So ist z. B. die Mantelfläche der Einzugswalze profiliert und beeinflusst das Magnetfeld. Ferner ist beispielsweise die obere der Einzugswalzen höhenbeweglich gelagert und passt ihren Abstand zur unteren Einzugswalze dem Erntegutdurchsatz an. Auch diese Bewegung führt zu einer Beeinflussung des Magnetfelds. Zur Verringerung dieses bauartbedingten Einflusses können im Detektionsbereich und den angrenzenden Bereichen nichtferromagnetische Werkstoffe wie VA-Stähle oder Kunststoffe verwendet werden. Ein Beispiel hierfür wird in der DE 199 12 407 A1 beschrieben. Weitere Einflüsse, die zu Fehlauslösung der Metalldetektionseinrichtung führen können, sind externe Magnetfelder, beispielsweise das Erdmagnetfeld oder Magnetfelder von im Boden verlaufenden Stromkabeln etc.

Wird der Erntebetrieb durch Fehlauslösungen häufiger unnötig unterbrochen, führt dies unwillkürlich zur Erhöhung der Erntekosten. Zudem werden dementsprechend an sich richtige Auslöser schneller vom Bediener irrtümlich als Fehlauslöser gedeutet und können durch ein erneutes Aktivieren des Einzugs ohne Durchsuchen des Ernteguts dann doch noch zu Beschädigungen der Arbeitsaggregate führen. Zu häufige Fehlauslöser setzen folglich auch die Zuverlässigkeit der Metalldetektionseinrichtung herab. Zwar kann die Anzahl der Fehlauslöser durch eine intelligente Signalauswertung mit Signalfilter und der genannten Ansprechschwelle verringert werden. Wird jedoch die Ansprechschwelle des Metalldetektors sehr hoch gesetzt, um Fehlauslöser zu vermeiden, wird die Gefahr erhöht, dass Metallteile unentdeckt in die Maschine geraten. Insbesondere kleinere Metallteile, die die gesamte Maschine störungsfrei durchwandern, werden dann nicht entdeckt und verunreinigen letztlich das Erntegut. Folglich stellt jedoch die Einstellung der Ansprechschwelle der Signalauswerteeinrichtung des Metalldetektors immer einen Kompromiss zwischen möglichen Fehlauslösungen und möglichen Beschädigungen der Maschine bzw. einer Verunreinigung des Ernteguts durch nicht entdeckte Metallteile dar.

Es ist daher eine Aufgabe der vorliegenden Erfindung, einen Förderer und ein Verfahren der eingangs genannten Art derart weiter zu entwickeln, dass die Anzahl von Fehlauslösungen reduziert wird, ohne dass die Detektionszuverlässigkeit verringert wird.

Diese Aufgabe wird durch einen Förderer gemäß Patentanspruch 1 und durch ein Verfahren gemäß Patentanspruch 12 gelöst.

Erfindungsgemäß ist der Förderer hierzu mit einer Störsensoreinrichtung ausgestattet, welche bei einer Registrierung eines Störereignisses, das zu einer nicht durch Metallteile im zu fördernden Gut hervorgerufenen, von der Sensoranordnung der Metalldetektionseinrichtung registrierten Magnetfeldveränderung führt, ein Fehlauslöserwarnsignal ausgibt. D. h. die Idee besteht in einer rechtzeitigen Erkennung von Störereignissen mittels einer zusätzlichen Störsensoreinrichtung, so dass diese Störereignisse entsprechend berücksichtigt werden können.

Die Störsensoreinrichtung kann auf verschiedenste Weise ausgebildet sein. Wesentlich ist lediglich, dass durch diese Störsensoreinrichtung möglichst sicher Störereignisse gemessen werden, die letztendlich zu einer Registrierung von Magnetfeldänderungen an der Sensoreinrichtung der Metalldetektionseinrichtung führen. D. h. es können sowohl direkt Magnetfeldänderungen gemessen werden als auch andere Ereignisse, die indirekt dazu führen, dass die Sensoreinrichtung Magnetfeldveränderungen "sieht".

Bei einem bevorzugten Ausführungsbeispiel umfasst die Störsensoreinrichtung beispielsweise einen Magnetfeldsensor. Mittels dieses Magnetfeldsensors werden direkt, d. h. unmittelbar, Magnetfeldänderungen registriert, wie sie auch in der Sensoranordnung der Metalldetektionseinrichtung selbst gemessen werden. Dabei ist jedoch der Magnetfeldsensor so ausgebildet und/oder angeordnet, dass er nur solche Magnetfeldänderungen registriert, die nicht durch Metallteile im zu fördernden Gut hervorgerufen werden.

Besonders bevorzugt kann der Magnetfeldsensor dabei so ausgebildet und/oder angeordnet sein, dass nur Veränderungen von externen Magnetfeldern, beispielsweise Veränderungen des Erdmagnetfelds oder Magnetfelder aufgrund von Stromleitungen im Boden, registriert werden. Dies lässt sich beispielsweise durch eine Anordnung realisieren, bei der die Feldlinien des von der Magnetanordnung der Metalldetektionseinrichtung erzeugten Mess-Magnetfelds im Wesentlichen auf einer ersten Seite der Metalldetektionseinrichtung durch das vorbeigeförderte Gut verlaufen. Bei einer üblichen Anordnung der Metalldetektionseinrichtung in der unteren vorderen Einzugstrommel eines Förderers handelt es sich hierbei vorzugsweise um die Oberseite der Metalldetektionseinrichtung. Die Sensoranordnung der Metalldetektionseinrichtung ist dann in diesem Mess-Magnetfeld angeordnet. Bei Verwendung von Spulen als Sensorelemente sind diese beispielsweise so angeordnet, dass die Feldlinien des Mess-Magnetfelds im Wesentlichen durch die Spule verlaufen. Dies kann beispielsweise mit Hilfe von passend ausgebildeten Polschuhen innerhalb der Spulen sowie eine geeignete Anordnung der Spulen an den einzelnen Magneten der Magnetanordnung sichergestellt werden. Die Magnetfeldstörsensoreinrichtung ist dann auf einer dem Mess-Magnetfeld abgewandten Seite, beispielsweise der Unterseite der Metalldetektionseinrichtung, angeordnet und befindet sich somit im Wesentlichen außerhalb dieses Mess-Magnetfelds, d. h. allenfalls im Randbereich des Mess-Magnetfelds. Bei dem Magnetfeldsensor der Störsensoreinrichtung kann es sich im Übrigen um einen Sensor ähnlicher oder gleicher Bauart handeln wie bei den Sensorelementen der Sensoranordnung der Metalldetektionseinrichtung selbst.

Durch die passende Anordnung ist gewährleistet, dass Metallteile innerhalb des Ernteguts, welche das Mess-Magnetfeld verändern, von der Sensoranordnung der Metalldetektionseinrichtung sofort registriert werden. Da sich der Magnetfeldsensor der Störsensoreinrichtung jedoch nicht innerhalb des Mess-Magnetfelds bzw. allenfalls am Rande des Mess-Magnetfelds befindet, werden diese Veränderungen des Mess-Magnetfelds vom Magnetfeldsensor der Störsensoreinrichtung gar nicht oder nicht mit der erforderlichen Intensität registriert. In diesem Fall sendet folglich die Metalldetektionseinrichtung ordnungsgemäß ein Signal aus, ohne dass die Störsensoreinrichtung ein Fehlauslösewarnsignal ausgibt. Treten dagegen Veränderungen von externen Magnetfeldern auf, beispielsweise wenn die Erntemaschine über ein im Boden liegendes Stromkabel fährt, überlagert sich dieses externe Magnetfeld dem Mess-Magnetfeld. Somit wird von der Sensoreinrichtung der Metalldetektionseinrichtung eine Magnetfeldänderung registriert. Gleichzeitig wird dieses externe Magnetfeld aber auch vom Magnetfeldsensor der Störsensoreinrichtung registriert. In diesem Fall gibt folglich nicht nur die Sensoranordnung der Metalldetektionseinrichtung ein Signal aus sondern auch die Störsensoreinrichtung gibt ein Fehlauslösewarnsignal aus. Somit ist klar, dass es sich bei der Auslösung der Sensoranordnung der Metalldetektionseinrichtung um eine Fehlauslösung handelt.

Bei einer sehr einfachen und kostengünstigen Realisierung dieses Ausführungsbeispiels weist die Metalldetektionseinrichtung eine auf einer dem vorbeigeförderten Gut abgewandten Seite der Magnetanordnung befindliche Metallwand auf, welche die Magnetfeldlinie des Mess-Magnetfelds sammelt und in Richtung der Magnetanordnung leitet. Derzeit üblicherweise in Erntemaschinen eingesetzte Metalldetektionseinrichtungen weisen in der Regel ohnehin eine solche auf der Unterseite befindliche, oft als "Magnetwanne" bezeichnete Metallwand auf. Der Magnetfeldsensor der Störsensoreinrichtung ist dann auf der von der Magnetanordnung abgewandten Seite dieser Metallwand, d.h. beispielsweise unterhalb der Magnetwanne, angeordnet.

Bei einem weiteren Ausführungsbeispiel weist die Störsensoreinrichtung zusätzlich oder alternativ einen Beschleunigungssensor auf. Ein solcher Beschleunigungssensor dient dazu, an der Sensoranordnung der Metalldetektionseinrichtung auftretende Beschleunigungskräfte als Störereignisse zu registrieren. Auch solche Ereignisse können nämlich zu einer Magnetfeldänderung an der Sensoranordnung führen. So kann es beispielsweise durch Bodenunebeneinheiten, z. B. beim Durchfahren von Schlaglöchern, zu starken Erschütterungen des Fahrzeugs kommen, wodurch aufgrund des Lagerspiels oder Verbindungen des Einzugsgehäuses etc. Veränderungen des Magnetfelds auftreten. Ebenso ist zu berücksichtigen, dass auch die bei solchen Erschütterungen registrierten, schnellen Erdmagnetfeldveränderungen zu Fehlauslösungen führen können.

Bei einem besonders bevorzugten Ausführungsbeispiel weist die Störsensoreinrichtung entlang einer quer zu einer Gutflussrichtung verlaufenden Richtung mehrere an verschiedenen Positionen angeordnete Sensoren auf. Dabei kann es sich um gleichartige oder unterschiedliche Sensortypen handeln. So könnten beispielsweise zwei Magnetfeldsensoren an den axialen Enden einer Einzugswalze angeordnet sein, da in der Nähe der Walzenflansche Störungen besonders häufig auftreten. Weiterhin könnte beispielsweise im mittleren Bereich der Einzugswalze ein Beschleunigungssensor angeordnet sein. Die Signale der verschiedenen Sensoren der Störsensoreinrichtung können dann entsprechend verarbeitet werden und ggf. ein Fehlauslösewarnsignal ausgegeben werden.

Das Fehlauslösewarnsignal der Störsensoreinrichtung kann auf verschiedenste Weise genutzt werden. So kann beispielsweise das Fehlauslösewarnsignal an die Signalauswerteeinrichtung ausgegeben werden. Dabei kann die Signalauswerteeinrichtung derart ausgebildet sein, dass unter Verwendung des Fehlauslösewarnsignals ein von der Sensoranordnung der Metalldetektionseinrichtung ausgegebenes Signal korrigiert wird. Insbesondere können beispielsweise Magnetfeldänderungen, die nicht durch Störmetall verursacht werden, aus dem Signal herausgerechnet werden. Ebenso kann die Metalldetektionseinrichtung, insbesondere die Signalauswerteeinrichtung, auch so ausgebildet sein, dass bei Empfang eines Fehlauslösewarnsignals die Metalldetektionseinrichtung bzw. die Signalauswerteeinrichtung vorübergehend vollständig deaktiviert wird oder ggf. auch einfach die Empfindlichkeit der Metalldetektionseinrichtung bzw. der Signalauswerteeinrichtung - beispielsweise durch Veränderung der Ansprechschwelle - vorübergehend reduziert wird. In einem bestimmten vorgegebenen Zeitraum kann dann der Metalldetektor wieder aktiviert werden bzw. auf die normale Empfindlichkeit zurückgestellt werden.

Des Weiteren kann das Fehlauslösewarnsignal auch direkt an die Schnellstoppeinrichtung ausgegeben werden, so dass dort der Schnellstopp bei Empfang eines Stoppsignals der Metalldetektionseinrichtung, welches in einem nachfolgenden, bestimmten kurzen Zeitraum nach dem Fehlauslösewarnsignal eingeht, unterdrückt wird.

Alternativ oder zusätzlich kann das Fehlauslösewarnsignal auch direkt an den Bediener der Maschine ausgegeben werden. Dies bietet sich insbesondere dann an, wenn ein Störereignis erst nach dem Fehlauslöser registriert wird und die Zeit nicht mehr ausreicht, die Fehlauslösung beispielsweise in der Signalauswerteeinrichtung oder in der Schnellstoppeinrichtung zu unterdrücken. In diesem Fall wird der Bediener darüber informiert, dass es sich um eine Fehlauslösung handelt, so dass er ohne lange Wartezeit und ohne zunächst das Erntegut durchsuchen zu müssen wieder starten kann. Hierzu muss die Störsensoreinrichtung entsprechend mit einer Signalausgabeeinrichtung in der Fahrerkabine - wobei es sich um ein Teil einer normalen Bedienerschnittstelle der Maschine, beispielsweise ein übliches Display etc. handeln kann - direkt oder indirekt, z.B. über eine weitere Steuereinrichtung etc., verbunden sein.

Die Erfindung wird im Folgenden unter Hinweis auf die beigefügten Zeichnungen anhand von Ausführungsbeispielen näher erläutert. Es zeigen:
Figur 1 eine schematische Darstellung eines Feldhäckslers mit einem Ausführungsbeispiel eines erfindungsgemäßen Förderers,
Figur 2 ein Blockschaltbild zur Darstellung der Sensoranordnung und der Signalauswerteeinrichtung einer Metalldetektionseinrichtung,
Figur 3 einen Querschnitt durch eine Metalldetektionseinrichtung mit einer zusätzlichen Störsensoreinrichtung,
Figur 4 eine axiale Draufsicht auf eine Einzugswalze eines Förderers zur Darstellung der Lage der Metalldetektionseinrichtung gem. Figur 3 im Förderer,
Figur 5 einen Längsschnitt durch die Einzugswalze nach Figur 4 entlang der Schnittlinie A-B.

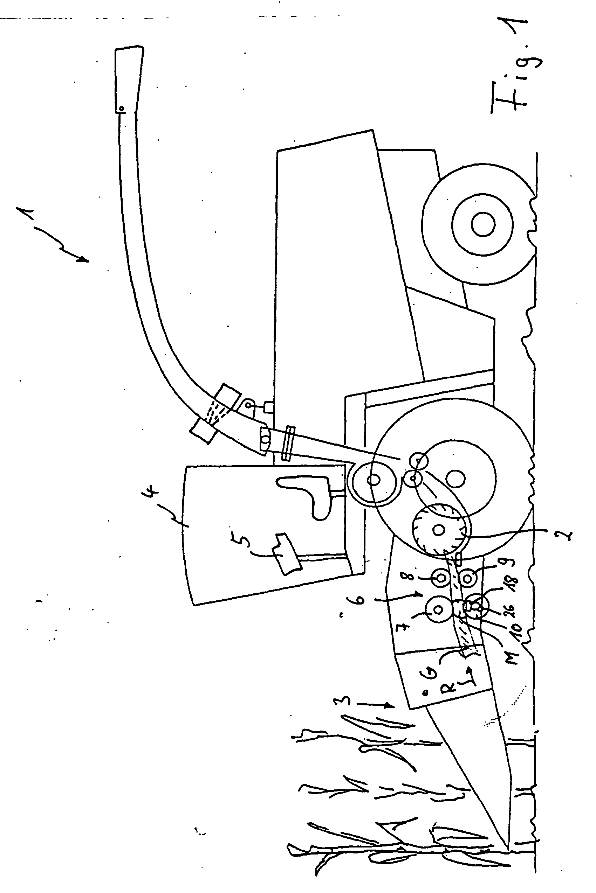

Bei der in Figur 1 schematisch dargestellten Erntemaschine 1 handelt es sich um einen typischen Feldhäcksler. In Fahrtrichtung vorne am Feldhäcksler 1 ist ein Erntevorsatzgerät 3 angeordnet, hier beispielsweise ein Maisgebiss zum Abernten eines Maisfelds. Mittels eines Schneidaggregats (nicht dargestellt) des Vorsatzgeräts 3 werden die Maispflanzen in einer bestimmten Höhe über dem Boden abgeschnitten und dann in die Maschine 1 befördert.

Unmittelbar hinter dem Erntevorsatzgerät 3 befindet sich im Feldhäcksler 1 ein Förderer 6, bestehend aus zwei in Förderrichtung R hintereinander angeordneten Einzugswalzenpaaren 7, 8, 9, 10. Die beiden vorderen Einzugswalzen 7 und 10 dienen auch zum Vorpressen des Ernteguts G. Sie werden daher oft auch als Vorpresswalzen 7, 10 bezeichnet. Das Erntegut G wird dann hinter dem zweiten Einzugswalzenpaar 8, 9 in Richtung eines Häckselaggregats 2 geleitet, in dem das Erntegut G gehäckselt und beschleunigt wird und dann ggf. nach einer Nachbeschleunigung nach oben über einen Auswurfkrümmer auf einen von der Erntemaschine gezogenen Anhänger oder ein nebenher fahrendes Transportfahrzeug ausgeworfen wird.

Um zu vermeiden, dass Metallteile mit dem Erntegut in die Maschine gelangen können und zu Beschädigungen der Maschine 1 selbst oder zu Verunreinigungen des Ernteguts führen, befindet sich innerhalb des Förderers 6, hier in der vorderen unteren Einzugswalze 10, eine Metalldetektionseinrichtung 18. Sobald in der Metalldetektionseinrichtung 18 ein Metallteil im Erntegut G erkannt wird, gibt diese ein Signal aus, welches zu einem sofortigen Stopp der Maschine führt.

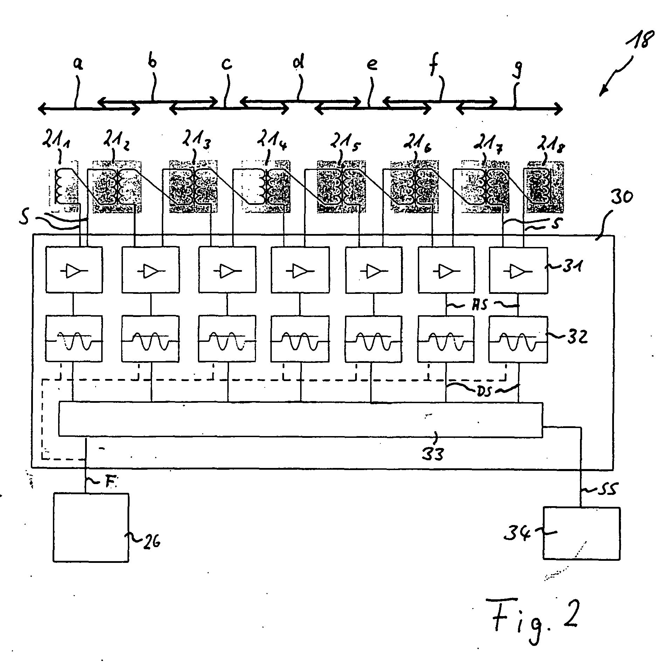

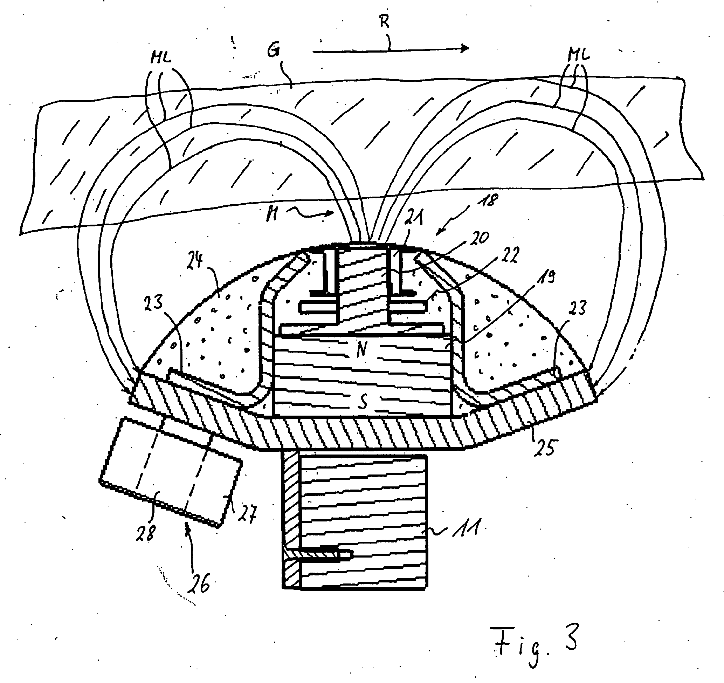

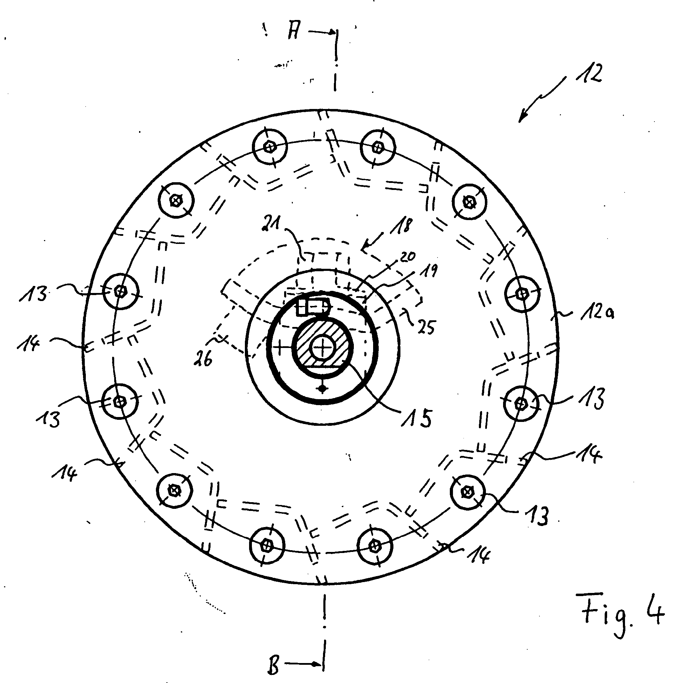

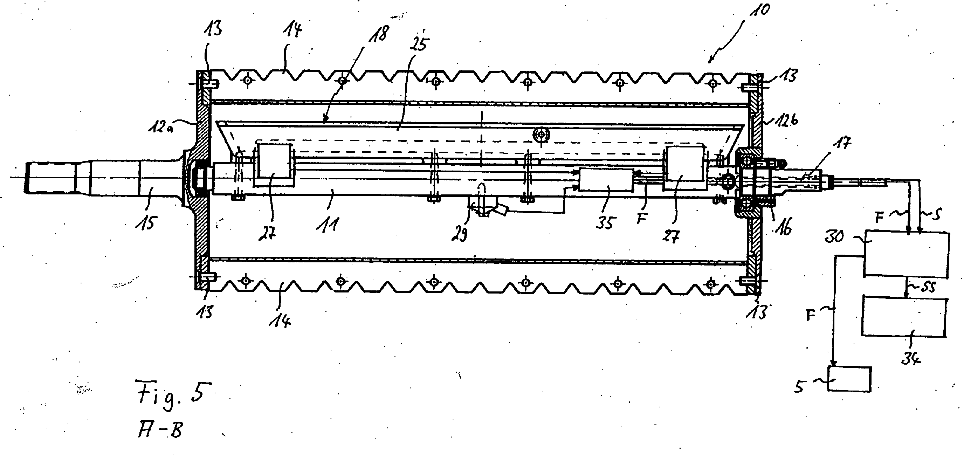

Die Metalldetektionseinrichtung 18 arbeitet hierzu mit einem Mess-Magnetfeld M, welches nach oben in den Erntegutstrom ausgerichtet ist (Figur 3), so dass das Erntegut G dieses Mess-Magnetfeld M durchläuft. Metallische Elemente führen zu einer Veränderung des Mess-Magnetfelds M, welche von der Metalldetektionseinrichtung 18 erkannt werden. Ein möglicher konkreter Aufbau einer solchen Metalldetektionseinrichtung 18 wird im Folgenden anhand der Figuren 2 bis 5 erläutert, wobei Figur 3 einen mechanischen Aufbau und Figur 2 einen schaltungstechnischen Aufbau zeigt. Die Figuren 4 und 5 zeigen die Anordnung dieses konkreten Aufbaus innerhalb der Einzugswalze 10.

Ein Kernstück der Metalldetektionseinrichtung 18 ist eine Magnetanordnung 19, welche aus mehreren in einer Reihe quer zur Förderrichtung R des Ernteguts G nebeneinander angeordneten einzelnen Magneten besteht, die hier jeweils. mit ihrem Nordpol N nach oben und ihrem Südpol S nach unten weisen. Alternativ kann statt einer Anzahl von einzelnen Permanentmagneten auch ein langgestreckter, durchgehender Magnet verwendet werden. Diese Magnetanordnung 19 befindet sich auf einer Metallwand 25, im Folgenden auch Magnetwanne 25 genannt, welche sich ebenfalls über die gesamte Breite quer zur Förderrichtung R des Ernteguts G erstreckt (Figur 5).

Auf der Oberseite der Magnetanordnung 19 befinden sich mehrere Polschuhe 20. Diese weisen jeweils einen unteren breiten Abschnitt, welcher auf der Nordpolseite der Magnetanordnung 19 aufliegt, und einen oberen schmalen Abschnitt auf. Die oberen Abschnitte der Polschuhe 20 ragen jeweils in einzelne Spulen 21₁,..., 21₈ (Figur 2) hinein. Diese Spulen 21₁,..., 21₈ bilden die Sensoranordnung 21, um Veränderungen des Mess-Magnetfelds M zu registrieren. Insgesamt handelt es sich hierbei um acht einzelne Polschuhe 20 mit acht verschiedenen Spulen 21₁,..., 21₈, die mit ihren Detektionsbereichen a, b, c, d, e, f, g die gesamte Breite quer zur Förderrichtung R abdecken. Dies ist in Figur 2 schematisch dargestellt. Bei den acht Spulen 21₁,..., 21₈ handelt es sich jeweils um Doppelspulen mit zwei Wicklungen, wobei allerdings von der ersten und letzten Spule 21₁, 21₈ jeweils nur eine Wicklung verwendet wird.

Wie in Figur 3 dargestellt, verlaufen die Magnetfeldlinien ML des Mess-Magnetfelds M vom Nordpol N der Magnetanordnung 19 aus durch die einzelnen Polschuhe 20 - und somit durch die Spulen 21₁,..., 21₈ der Sensoreinrichtung 21 - nach oben hin durch das Erntegut G und zurück über die Magnetwanne 25 zum Südpol S der Magnetanordnung 19. Eine Veränderung des Mess-Magnetfelds M durch Metallteile im Erntegut G führt folglich dazu, dass in den Spulen 21₁,..., 21₈, in deren Detektionsbereich a, b, c, d, e, f, g die Mess-Magnetfeldveränderung auftritt, ein Strom induziert wird, welcher dann als Signal S abgegriffen und ausgewertet werden kann.

Es ist klar, dass die Magnetanordnung 19, die Polschuhe 20, die Spulen 21₁,..., 21₈ der Sensoranordnung 21 und die Magnetwanne 25 möglichst fest miteinander verbunden sein müssen, um Magnetfeldschwankungen durch Veränderungen der relativen Position dieser Komponenten zueinander, beispielsweise bei Erschütterung der Erntemaschine 1 etc., zu vermeiden. Hierzu dienen Klammern 23, die die Spulen 21₁,..., 21₈ mit der Magnetanordnung 19 und den darauf befindlichen Polschuhen 20 an der Magnetwanne 25 halten. Außerdem ist der gesamte Aufbau in eine Vergussmasse 24 eingegossen und so vor Beschädigung im rauen Erntebetrieb weitgehend geschützt. Die Magnetwanne 25 selbst ist an einer starren Tragachse 11 innerhalb der unteren Einzugswalze 10 angeordnet. Die genauere Lage und Position wird erst später anhand der Figuren 4 und 5 erläutert.

Die Signalauswertung der einzelnen Signale S der Spulen 21₁,..., 21₈ der Sensoranordnung 21 erfolgt in einer Signalauswerteeinrichtung 30. Diese kann direkt in der Metalldetektionseinrichtung 18, beispielsweise auf einer zwischen dem unteren Teil der Polschuhe 20 und den Spulen der Sensoranordnung 21 angeordneten Platine 22 angeordnet sein (Figur 3). Sie kann sich aber auch außerhalb der Metalldetektionseinrichtung 18, beispielsweise in einem Prozessor einer Steuereinrichtung der Maschine 1 befinden. Grund-Grundsätzlich ist es auch möglich, dass Teile der Signalauswerteinrichtung 30, beispielsweise Vorverstärker o. Ä., auf der Platine 22 in der Metalldetektionseinrichtung 18 und weitere Teile der Auswerteeinrichtung 30 extern in einem gesonderten Gerät innerhalb der Erntemaschine 1, insbesondere in der zentralen Steuereinrichtung der Maschine 1, untergebracht sind.

Um zu vermeiden, dass z. B. durch die Bewegung des Walzenmantels oder durch das Erdmagnetfeld erzeugte, gleichmäßig auftretende Magnetfeldänderungen, welche die gesamte Breite des Einzugs betreffen, zu einem fehlerhaften Auslösen der Metalldetektionseinrichtung 18 führen, sind - wie in Figur 2 dargestellt - die einzelnen Spulen 21₁,..., 21₈ der Sensoranordnung 21 jeweils als Doppelspulen ausgeführt. Dabei sind jeweils zwei Wicklungen benachbarter Spulen 21₁,..., 21₈ gegensinnig mit den Eingängen eines gemeinsamen Differenzverstärkers 31 verschaltet. Von den Randspulen 21₁, 21₈ wird dabei nur jeweils eine der vorhandenen Wicklungen genutzt.

Diese Verschalung führt dazu, dass Störungen, die alle Spulen 21₁,..., 21₈ betreffen, wie beispielsweise eine gleichmäßige Magnetfeldänderung über die gesamte Breite des Einzugsaggregats, in allen Spulen 21₁,..., 21₈ gleich stark registriert werden. Die induzierten Ströme heben sich dann bei der Differenzverstärkung gegenseitig auf, so dass solche Ereignisse nicht registriert werden. Tritt eine Magnetfeldänderung dagegen nur in einem Teil der einzelnen Detektionsbereiche a,... , g auf, so führt dies dazu, dass nur in einem Teil der Spulen 21₁,..., 21₈ ein Strom induziert wird, wobei bei einigen der einander benachbarten Spulen 21₁,..., 21₈ unterschiedlich starke Ströme induziert werden. Dadurch entsteht ein Differenzsignal, welches in den Verstärkern 31 verstärkt wird.

Die Ausgangssignale AS der Verstärker 31 werden an Analog-/Digitalwandler 32 weitergeleitet, in denen jeweils eine Ansprechschwelle einstellbar ist. Nur wenn das analoge Eingangssignal AS diese einstellbare Schwelle überschreitet, wird am Ausgang der Analog-/Digitalwandler 32 ein digitales Ausgangssignal DS ausgegeben, welches dann an einen Auswerteprozessor 33 übergeben wird. Dieser gibt ausgangsseitig ein Stoppsignal SS an eine entsprechende Schnellstoppschaltung 34 der Maschine aus, sobald ein digitales Eingangssignal DS an einem der mit den Analog-/Digitalwandlern 32 verbundenen Eingänge auftritt. Die Schnellstoppschaltung 34 sorgt dann für ein sofortiges Anhalten der Fördereinrichtung 6 bzw. der gesamten Erntemaschine 1.

Ein Problem bei einer herkömmlichen Metalldetektionseinrichtung tritt dann auf, wenn es lediglich in den Detektionsbereichen a,..., g bei einem Teil der Spulen 21₁,..., 21₈ zu einer Magnetfeldveränderung kommt, die aber durch externe Einflüsse, d. h. nicht durch Metallteile im Erntegut G, verursacht wird. In diesem Fall kommt es zu einem Fehlauslösen der Metalldetektionseinrichtung. Ein typisches Störereignis könnte beispielsweise das Durchfahren eines externen Magnetfelds sein, welches sich dem Mess-Magnetfeld überlagert, aber nur auf einen Teil der einzelnen Spulen 21₁,..., 21₈ der Sensoranordnung 21 wirkt. Ebenso kann ein solches Störereignis ein Durchfahren eines Schlaglochs sein, so dass auf einer Seite die Fördereinrichtung 6 ruckartig bewegt wird. Eine solche starke Beschleunigung der Spulen 21₁,..., 21₈ der Sensoranordnung 21 im Erdmagnetfeld führt ebenfalls dazu, dass in den Spulen 21₁,..., 21₈ unterschiedlich starke Ströme induziert werden, was insgesamt zu einem Fehlauslösen führen kann.

Um derartige Fehlauslösungen zu vermeiden, weist der Förderer 6 erfindungsgemäß eine zusätzliche Störsensoreinrichtung 26 auf. Diese registriert speziell solche Störereignisse, die zu einer nicht durch Metallteile im Erntegut G hervorgerufenen, von der Sensoranordnung 21 registrierten Magnetfeldveränderung führen können, und gibt dann ein Fehlauslösewarnsignal F aus. Dieses Fehlauslösewarnsignal F wird beispielsweise an den Auswertprozessor 33 übermittelt (siehe Figur 2) und führt dort dazu, dass die Ausgabe eines Stoppsignals SS in einem bestimmten nachfolgenden Zeitraum an die Schnellstoppschaltung 34 unterdrückt wird. Alternativ kann dieses Fehlauslösesignal F auch direkt an die Analog-/Digitalwandler 32 ausgegeben werden, um dort die einstellbare Schwelle heraufzusetzen, so dass die Signalauswerteeinrichtung 30 und somit die gesamte Metalldetektionseinrichtung 18 unempfindlicher wird. Vorzugsweise wird dafür gesorgt, dass nach einer bestimmten Zeitspanne von einigen wenigen Sekunden die einstellbare Schwelle automatisch wieder heruntergesetzt wird.

Der genauere Aufbau und die Lage der Störsensoreinrichtung 26 ist den Figuren 3, 4 und 5 zu entnehmen.

Figur 4 zeigt aus axialer Sicht die Anordnung der Magnetwanne 25 mit der darin befindlichen Magnetanordnung 19, den Polschuhen 20, der Sensoranordnung 21 etc. innerhalb der unteren vorderen Einzugswalze 10 des Förderers und Figur 5 eine Ansicht dieser Anordnung von vorn in Förderrichtung betrachtet.

Wie aus Figur 5 zu ersehen ist, besteht die Einzugswalze 10 aus zwei endseitigen scheibenförmigen Walzenflanschen 12a, 12b. An dem in Figur 5 links dargestellten ersten Walzenflansch 12a ist eine sich nach außen hin erstreckende Welle 15 befestigt, welche rotierbar in der Maschine gelagert ist und welche als Antriebswelle dient. Der zweite Walzenflansch 12b ist mittels eines Lagers 16 auf einer starren Achse 11 gelagert, welche sich durch die gesamte Walze 10 hindurchstreckt und endseitig rotierbar in einer Ausnehmung in dem mit der Welle 15 verbundenen ersten Walzenflansch 12a gelagert ist. Hierbei sind die Antriebswelle 15 und die starre Achse 11 koaxial zueinander angeordnet. Die beiden Walzenflansche 12a und 12b sind jeweils über mehrere winkelförmige, parallel zur Walzenachse 11 verlaufende Walzenprofile 14 untereinander verbunden. Diese Walzenprofile 14 sind entlang des Umfangs der Walze 10 gleichmäßig verteilt und bilden so eine geschlossene Mantelfläche mit einer schaufelartigen Profilierung, um das Erntegut G in der gewünschten Weise zwischen den Walzenpaaren 7, 10, 8, 9 durch den Förderer 6 zu ziehen. Die genaue Form der Profilierung lässt sich am besten aus Figur 4 ersehen. Die einzelnen Förderprofile 14 sind hierbei endseitig jeweils mittels Schrauben 13 mit den Walzenflanschen 12a, 12b verbunden.

An der starren Achse 11 innerhalb der rotierenden Einzugswalze 10 ist die Magnetwanne 25 mit den darin befindlichen weiteren Komponenten, wie Magnetanordnung 19, Polschuhen 20 und den Sensorelementen, d. h. den Spulen 21₁,..., 21₈, befestigt. Die Achse 11 ist dabei zumindest im Bereich des Lagers 16 hohl, d.h. sie weist eine als Durchführung 17 dienende Bohrung auf, durch welche die Kabel zum Abgreifen der Signale S der Metalldetektionseinrichtung 18 bzw. der Sensoranordnung 21 aus der Walze 10 geführt werden.

Im Einzelnen umfasst die Störsensoreinrichtung 26 bei dem dargestellten Ausführungsbeispiel zwei Störspulen 27, welche jeweils im Inneren einen Polschuh 28 aufweisen. Diese Störspulen 27 sind im vorliegenden Ausführungsbeispiel in gleicher Weise ausgeführt wie die Spulen 21₁,..., 21₈ der Sensoranordnung 21 der Metalldetektionseinrichtung 18. Jedoch befinden sich die Störspulen 27 jeweils unterhalb der Magnetwanne 25. Dadurch ist dafür gesorgt, dass die Störspulen 27 im Wesentlichen außerhalb des Mess-Magnetfelds M angeordnet sind. Außerdem weisen die Störspulen 27 entgegengesetzt zu den Sensorspulen 21₁,..., 21₈ der Sensoranordnung 21 nach unten. Die Anordnung ist hier konkret so, dass die Störspulen 27 schräg nach vorn geneigt sind.

Sobald eine Magnetfeldänderung aufgrund eines externen Magnetfelds auftritt wird dies von der betreffenden Störspule 27, in deren Detektionsbereich sich das Magnetfeld verändert, registriert. Es wird genau wie in den obenseitig zur Sensoranordnung 21 der Metalldetektionseinrichtung 18 gehörenden Spulen ein Strom 21₁,..., 21₈ induziert. Dieser kann dann unmittelbar als Fehlerauslösewarnsignal genutzt werden. Es ist aber auch möglich, die Signale der einzelnen Störspulen 27 zunächst einer Störsensorauswerteschaltung 35 (in Figur 5 schematisch dargestellt) zuzuführen, welche die Störsignale zunächst auswertet und dann ggf. ein Fehlauslösewarnsignal F ausgibt.

Zusätzlich weist die Störsensoreinrichtung 26 bei dem dargestellten Ausführungsbeispiel noch im mittleren Bereich der Einzugswalze 10 einen Beschleunigungssensor 29 auf (Figur 5), dessen Ausgangssignal ebenfalls der Störsensorauswerteeinrichtung 35 zugeführt wird. Durch die spezielle Anordnung der verschiedenen Sensoren 27, 29 der Störsensoreinrichtung 26 kann in vielen Fällen nicht nur festgestellt werden, dass ein Störereignis vorliegt, sondern ggf. auch von welcher Art dieses Störereignis ist. Tritt beispielsweise durch eine ruckartige Beschleunigung der Magnetfeldsensoren 27 der Störsensoreinrichtung eine Magnetfeldänderung auf, beispielsweise infolge des Durchfahrens eines Schlaglochs, so wird dieses Ereignis auch vom Beschleunigungssensor 29 gemessen, so dass insgesamt klar ist, dass dieses Stoß-Ereignis zur Magnetfeldänderung geführt hat. Gibt dagegen nur einer der beiden Magnetfeldsensoren 27 ein Signal aus, ohne dass der Beschleunigungssensor 29 reagiert, so weist dies darauf hin, dass zusätzlich ein externes Magnetfeld auftritt. Ebenso kann durch die verschiedenen Magnetfeldsensoren 27 festgestellt werden, ob ein Störereignis im rechten oder im linken Bereich der Einzugswalze 10 oder über die gesamte Breite registriert wird.

Das Fehlauslösewarnsignal F kann vorzugsweise so ausgebildet sein, dass es auch Informationen über den jeweiligen Fehler bzw. das Störereignis enthält. In diesem Fall kann das Fehlauslösewarnsignal F beispielsweise innerhalb des Auswerteprozessors 33 der Signalauswerteeinrichtung 30 auch dazu genutzt werden, um einen Abgleich mit den von den Sensoren 21₁,..., 21₈ der Sensoranordnung 21 der Metalldetektionseinrichtung 18 ausgegebenen Signalen S durchzuführen, um so die Detektionssicherheit noch weiter zu erhöhen. Insbesondere kann geprüft werden, ob das Ausgangssignal S der Sensoranordnung 21 der Metalldetektionseinrichtung 18, welches auf ein Metallteil im zu fördernden Gut G hinweist, aus dem gleichen Bereich kommt wie das Fehlauslösewarnsignal F, d. h. ob diese beiden Signale wirklich korreliert sind oder ob zufälligerweise beide Einrichtungen gleichzeitig auslösen.

Das Fehlauslösewarnsignal F kann bei dem dargestellten Äusführungsbeispiel im Übrigen auch zusätzlich oder alternativ - beispielsweise wenn eine Verhinderung eines fehlerhaften Stoppsignals SS aus zeitlichen Gründen nicht mehr möglich ist - von der Signalauswerteeinrichtung 30 direkt über eine akustische und/oder optische Anzeigeeinrichtung 5, die sich im Führerhaus 4 der Erntemaschine befindet, an den Fahrer ausgegeben werden. Anhand des dort ausgegebenen Fehlauslösewarnsignals F erkennt der Fahrer dann sofort, dass ein zuvor erfolgter Schnellstopp der Erntemaschine 1 aufgrund einer Fehlauslösung der Metalldetektionseinrichtung 18 erfolgt ist und kann die Erntemaschine 1 wieder starten, ohne zuvor das eingezogene Erntegut G wieder auszuwerfen und zu durchsuchen.

Es wird abschließend noch einmal darauf hingewiesen, dass das vorbeschriebene konkrete Ausführungsbeispiel eines erfindungsgemäßen Förderers lediglich ein Ausführungsbeispiel ist, welches vom Fachmann ohne weiteres in verschiedenster Weise modifiziert werden kann, ohne den Rahmen der Erfindung zu verlassen. Insbesondere kann die Störsensoreinrichtung auch nur mit einem einzelnen Störsensor oder mit einer erheblich höheren Anzahl von Störsensoren realisiert werden. Ebenso können die verschiedensten unterschiedlichen Störsensoren verwendet werden, beispielsweise Spulen mit oder ohne integriertem Polschuh oder sogar Sensoren mit einem eigenen Mess-Magnetfeld, d.h. es wird als Störsensor eine Form eines separaten Metalldetektors verwendet. Ebenso können Hallsensoren zur Messung von Magnetfeldern sowie beliebige Beschleunigungs- und Geschwindigkeitsmesseinrichtungen genutzt werden. Weiterhin kann auch die konkrete Lage der einzelnen Sensoren jeweils Erfordernissen angepasst werden. Da es häufig im Bereich der Walzenflansche 12a, 12b zu Fehlauslösungen kommt, werden jedoch bevorzugt zumindest an diesen Enden der Walze jeweils entsprechende Sensoren positioniert. Sofern nur ein Sensor verwendet werden soll, hat es sich als besonders bevorzugt herausgestellt, diesen auf der Getriebeseite (Antriebsseite) innerhalb der Einzugswalze 10 anzuordnen. Des Weiteren ist die Erfindung nicht auf die konkrete Form solcher Förderer beschränkt. Im Übrigen kann bei Verwendung eines solchen Förderers mit mehreren Einzugswalzen die Metalldetektionseinrichtung und/oder die Störsensoreinrichtung auch in anderer Form am Förderer, insbesondere auch in einer der anderen Einzugswalzen realisiert sein.

### Bezugszeichenliste

- 1: Erntemaschine
- 2: Häckselaggregat
- 3: Vorsatzgerät
- 4: Führerhaus
- 5: Anzeigeeinrichtung
- 6: Förderer
- 7: Einzugswalzen
- 8: Einzugswalzen
- 9: Einzugswalzen
- 10: Einzugswalzen
- 11: Achse
- 12a: Walzenflansch
- 12b: Walzenflansch
- 13: Schraube
- 14: Walzenprofil
- 15: Antriebswelle
- 16: Lager
- 17: Durchführung
- 18: Metalldetektionseinrichtung
- 19: Magnetanordnung
- 20: Polschuh
- 21: Sensoranordnung
- 21₁,..., 21₈: Spulen
- 22: Platine
- 23: Klammer
- 24: Vergussmasse
- 25: Metallwand / Magnetwanne
- 26: Störsensoreinrichtung
- 27: Magnetsensor
- 28: Polschuh
- 29: Beschleunigungssensor
- 30: Signalauswerteeinrichtung
- 31: Differenzverstärker
- 32: Analog-/Digitalwandler
- 33: Auswerteprozessor
- 34: Schnellstoppschaltung
- 35: Störsensorauswerteschaltung
- A: analoges Eingangssignal
- D: digitales Ausgangssignal
- F: Fehlauslösewarnsignal
- G: Erntegut
- ML: Magnetfeldlinien
- N: Nordpol
- R: Förderrichtung
- S: Südpol
- SS: Stoppsignal
- a, b, c, d, e, f, g: Detektionsbereiche

## Patentansprüche

1. Förderer (6) mit einer Metalldetektionseinrichtung (18) zum Detektieren von Metallteilen in einem zu fördernden Gut (G),
- mit einer Magnetanordnung (19) zum Erzeugen eines Mess-Magnetfelds (M), durch welches das zu fördernde Gut (G) bewegt wird,
- mit einer Sensoranordnung (21), welche eine Veränderung des Mess-Magnetfelds (M) registriert,
- und einer Signalauswerteeinrichtung (30), welche ein bei einer Magnetfeldänderung von der Sensoranordnung (21) ausgegebenes Signal (S) zur Erkennung eines Metallteils im zu fördernden Gut (G) auswertet,
**gekennzeichnet durch**
eine Störsensoreinrichtung (26), welche bei einer Registrierung eines Störereignisses, das zu einer nicht **durch** Metallteile im zu fördernden Gut (G) hervorgerufenen, von der Sensoranordnung (21) registrierten Magnetfeldveränderung führt, ein Fehlauslösewarnsignal (F) ausgibt.

2. Förderer nach Anspruch 1,
**dadurch gekennzeichnet, dass**
die Störsensoreinrichtung (26) einen Magnetfeldsensor (27) umfasst, welcher so ausgebildet und/oder angeordnet ist, dass er im Wesentlichen nur solche Magnetfeldänderungen registriert, die nicht durch Metallteile im zu fördernden Gut (G) hervorgerufen werden.

3. Förderer nach Anspruch 2,
**dadurch gekennzeichnet, dass**
der Magnetfeldsensor (27) eine Veränderung eines externen Magnetfelds registriert.

4. Förderer nach Anspruch 3,
**dadurch gekennzeichnet, dass**
die Feldlinien des von der Magnetanordnung (19) der Metalldetektionseinrichtung (18) erzeugten Mess-Magnetfelds (M) im Wesentlichen auf einer ersten Seite der Metalldetektionseinrichtung (18) durch das vorbeigeförderte Gut (G) verlaufen und die Sensoranordnung (21) der Metalldetektionseinrichtung (18) in diesem Mess-Magnetfeld (M) angeordnet ist und der Magnetfeldsensor (27) der Störsensoreinrichtung (26) auf einer vom Mess-Magnetfeld (M) abgewandten Seite der Metalldetektionseinrichtung (18) angeordnet ist.

5. Förderer nach Anspruch 4,
**dadurch gekennzeichnet, dass**
die Metalldetektionseinrichtung (18) eine auf einer dem vorbeibeförderten Gut (G) abgewandten Seite der Magnetanordnung (19) befindliche Metallwand (25) aufweist, welche die Magnetfeldlinien (ML) des Mess-Magnetfelds (M) sammelt und in Richtung der Magnetanordnung (19) leitet, und der Magnetfeldsensor (27) der Störsensoreinrichtung (26) auf der von der Magnetanordnung (19) abgewandten Seite der Metallwand (25) angeordnet ist.

6. Förderer nach einem der Ansprüche 1 bis 5,
**dadurch gekennzeichnet, dass**
die Störsensoreinrichtung (26) einen Beschleunigungssensor (29) umfasst.

7. Förderer nach einem der Ansprüche 1 bis 6,
**dadurch gekennzeichnet, dass**
die Störsensoreinrichtung (26) entlang einer quer zu einer Gutflussrichtung (R) verlaufenden Richtung mehrere an verschiedenen Positionen angeordnete Sensoren (27, 29) aufweist.

8. Förderer nach einem der Ansprüche 1 bis 7,
**dadurch gekennzeichnet, dass**
die Signalauswerteeinrichtung (30) derart ausgebildet ist, dass unter Verwendung eines von der Störsensoreinrichtung (26) empfangenen Fehlauslösewarnsignals (F) ein von der Sensoranordnung (21) der Metalldetektionseinrichtung (18) ausgegebenes Signal (S) korrigiert wird.

9. Förderer nach einem der Ansprüche 1 bis 8,
**dadurch gekennzeichnet, dass**
die Signalauswerteeinrichtung (30) derart ausgebildet ist, dass bei Empfang eines Fehlauslösewarnsignals (F) die Metalldetektionseinrichtung (18) vorübergehend deaktiviert wird oder die Empfindlichkeit der Metalldetektionseinrichtung (18) vorübergehend reduziert wird.

10. Förderer nach einem der Ansprüche 1 bis 9,
**dadurch gekennzeichnet, dass**
die Störsensoreinrichtung (26) mit einer Signalausgabeeinrichtung (5) verbunden ist, um das Fehlauslösewarnsignal (F) an einen Benutzer auszugeben.

11. Erntemaschine (1) mit einem Förderer (6) nach einem der Ansprüche 1 bis 10.

12. Verfahren zum Detektieren von Metallteilen in einem zu fördernden Gut (G), bei dem das zu fördernde Gut (G) durch ein Mess-Magnetfeld (M) bewegt wird und mit einer Sensoranordnung (21) eine Veränderung des Mess-Magnetfelds (M) registriert wird und ein bei einer Magnetfeldänderung von der Sensoranordnung (21) ausgegebenes Signal (S) zur Erkennung eines Metallteils im zu fördernden Gut (G) ausgewertet wird,
**dadurch gekennzeichnet, dass**
mittels einer Störsensoreinrichtung (26) Störereignisse, die zu einer nicht durch Metallteile im zu fördernden Gut (G) hervorgerufenen, von der Sensoranordnung (21) gemessenen Magnetfeldveränderung führen, erkannt werden und bei einer Registrierung eines Störereignisses ein Fehlauslösewarnsignal (F) generiert wird.

13. Verfahren nach Anspruch 12,
**dadurch gekennzeichnet, dass**
als Störereignisse mittels eines Magnetfeldsensors (27) der Störsensoreinrichtung (26) nicht durch Metallteile im zu fördernden Gut (G) hervorgerufene Magnetfeldänderungen registriert werden.

14. Verfahren nach Anspruch 12 oder 13,
**dadurch gekennzeichnet, dass**
als Störereignisse an der Sensoranordnung (21) auftretende Beschleunigungskräfte registriert werden.

15. Verfahren nach einem der Ansprüche 12 bis 14,
**dadurch gekennzeichnet, dass**
unter Verwendung des Fehlauslösewarnsignals (F) der Störsensoreinrichtung (26) ein von der Sensoranordnung (21) der Metalldetektionseinrichtung (18) ausgegebenes Signal (S) korrigiert wird.

16. Verfahren nach einem der Ansprüche 12 bis 15,
**dadurch gekennzeichnet, dass**
bei Empfang eines Fehlauslösewarnsignals (F) die Metalldetektionseinrichtung (18) vorübergehend deaktiviert wird oder die Empfindlichkeit der Metalldetektionseinrichtung (18) vorübergehend reduziert wird.

17. Verfahren nach einem der Ansprüche 12 bis 16,
**dadurch gekennzeichnet, dass**
das Fehlauslösewarnsignal (F) an einen Benutzer ausgegeben wird.

## Claims

1. A conveyor (6) comprising a metal detector device (18) for detecting pieces of metal in a material (G) to be conveyed,
- comprising a magnet arrangement (19) for producing a measuring magnetic field (M) through which the material (G) to be conveyed is moved,
- a sensor arrangement (21) which registers a change in the measuring magnetic field (M), and
- a signal evaluation device (30) which evaluates a signal (S) outputted by the sensor arrangement (21) upon a change in the magnetic field for recognition of a piece of metal in the material (G) to be conveyed,
**characterised by**
an interference sensor device (26) which outputs a fault triggering warning signal (F) upon registration of an interference event which leads to a change in the magnetic field which is not caused by pieces of metal in the material (G) to be conveyed and is registered by the sensor arrangement (21).

2. A conveyor according to claim 1 **characterised in that** the interference sensor device (26) includes a magnetic field sensor which is so designed and/or arranged that it registers substantially only those changes in magnetic field which are not caused by pieces of metal in the material (G) to be conveyed.

3. A conveyor according to claim 2 **characterised in that** the magnetic field sensor (27) registers a change in an external magnetic field.

4. A conveyor according to claim 3 **characterised in that** the field lines of the measuring magnetic field (M) produced by the magnet arrangement (19) of the metal detector device (18) extend substantially on a first side of the metal detector device (18) through the material (G) as it is conveyed therepast and the sensor arrangement (21) of the metal detector device (18) is arranged in said measuring magnetic field (M) and the magnetic field sensor (27) of the interference sensor device (26) is arranged on a side of the metal detector device (18), that is remote from the measuring magnetic field.

5. A conveyor according to claim 4 **characterised in that** the metal detector device (18) has a metal wall (25) which is disposed on a side of the magnet arrangement (19) remote from the material (G) conveyed therepast and which collects the magnetic field lines (ML) of the measuring magnetic field (M) and passes them in the direction of the magnet arrangement (19) and the magnetic field sensor (27) of the interference sensor device (26) is arranged on the side of the metal wall (25) remote from the magnet arrangement (19).

6. A conveyor according to one of claims 1 to 15 **characterised in that** the sensor device (26) includes an acceleration sensor (29).

7. A conveyor according to one of claims 1 to 6 **characterised in that** the interference sensor device (27) has a plurality of sensors (27, 29) arranged at various positions along a direction extending transversely with respect to a material flow direction (R).

8. A conveyor according to one of claims 1 to 7 **characterised in that** the signal evaluation device (30) is so adapted that a signal outputted by the sensor arrangement (21) of the metal detector device (18) is corrected using a fault triggering warning signal (F) received from the interference sensor device (26).

9. A conveyor according to one of claims 1 to 8 **characterised in that** the signal evaluation device (30) is so adapted that upon the reception of a fault triggering warning signal (F) the metal detector device (18) is temporarily deactivated or the sensitivity of the metal detector device (18) is temporarily reduced.

10. A conveyor according to one of claims 1 to 9 **characterised in that** the interference sensor device (26) is connected to a signal output device (5) to output the fault triggering warning signal (F) to a user.

11. A harvester (1) having a conveyor (6) according to one of claims 1 to 10.

12. A method of detecting pieces of metal in a material (G) to be conveyed, wherein the material (G) to be conveyed is moved through a measuring magnetic field (M) and a change in the measuring magnetic field (M) is registered with a sensor arrangement (21) and a signal (S) outputted by the sensor arrangement (21) upon a change in the magnetic field is evaluated to recognise a piece of metal in the material (G) to be conveyed,
**characterised in that**
interference events which lead to a change in magnetic field which is not caused by pieces of metal in the material (G) to be conveyed and which is measured by the sensor arrangement (21) are recognised by means of an interference sensor device (26) and a fault triggering warning signal (F) is generated when an interference event is registered.

13. A method according to claim 12 **characterised in that** changes in magnetic field which are not caused by pieces of metal in the material (G) to be conveyed are registered as interference events by means of a magnetic field sensor (27) of the interference sensor device (26).

14. A method according to claim 12 or claim 13 **characterised in that** acceleration forces which occur at the sensor arrangement (21) are registered as interference events.

15. A method according to one of claims 12 to 14 **characterised in that** a signal (S) outputted by the sensor arrangement (21) of the metal detector device (18) is corrected using the fault triggering warning signal (F) of the interference sensor device (26).

16. A method according to one of claims 12 to 15 **characterised in that** when a fault triggering warning signal (F) is received the metal detector device (18) is temporarily deactivated or the sensitivity of the metal detector device (18) is temporarily reduced.

17. A method according to one of claims 12 to 16 **characterised in that** the fault triggering warning signal (F) is outputted to a user.

## Revendications

1. Transporteur (6) muni d'un dispositif détecteur de métal (18) pour la détection de particules métalliques dans un produit à transporter (G),
- avec un système d'aimants pour produire un champ magnétique de mesure (M) à l'intérieur duquel le produit à transporter (G) est déplacé,
- avec un système de détecteurs (21) qui détecte une variation du champ magnétique de mesure (M),
- et avec un dispositif de traitement de signal (30), qui traite un signal délivré par le système de détecteurs (21) en présence d'une variation du champ magnétique de mesure (M), aux fins de détecter une particule métallique dans le produit à transporter (G),
**caractérisé par**
un dispositif détecteur d'anomalie (26), qui lors de la détection d'un évènement perturbateur, qui entraîne la détection par le système de détecteurs (21) d'une variation du champ magnétique de mesure (M) non due à la présence de particules métalliques dans le produit à transporter (G), délivre un signal d'avertissement de fausse alarme.

2. Transporteur selon la revendication 1, **caractérisé par le fait que** le dispositif détecteur d'anomalie (26) comprend un détecteur de champ magnétique (27) qui est agencé et/ou disposé de manière telle qu'il détecte principalement seulement les variations de champ magnétique qui ne résultent pas de la présence de particules métalliques dans le produit à transporter (G).

3. Transporteur selon la revendication 2, **caractérisé par le fait que** le détecteur de champ magnétique (27) détecte une variation d'un champ magnétique extérieur.

4. Transporteur selon la revendication 3, **caractérisé par le fait que** les lignes de champ du champ magnétique de mesure (M) produit par le système d'aimants (19) du dispositif détecteur de métal (18) s'étendent essentiellement sur un premier côté dudit dispositif détecteur de métal (18) à travers le produit à transporter (G), que le système de détecteurs (21) du dispositif détecteur de métal (18) est placé dans ledit champ magnétique de mesure (M) et que le détecteur de champ magnétique (27) du dispositif détecteur d'anomalie (26) est disposé sur un côté du dispositif détecteur de métal (18) éloigné du champ magnétique de mesure (M).

5. Transporteur selon la revendication 4, **caractérisé par le fait que** le dispositif détecteur de métal (18) présente une paroi métallique (25) qui est située sur un côté du système d'aimants (19) éloigné du produit à transporter (G) et capte les lignes de champ (ML) du champ magnétique de mesure (M) et les dirige vers le système d'aimants (19), que le système de détecteurs (21) du dispositif détecteur de métal (18) est placé dans ledit champ magnétique de mesure (M) et que le détecteur de champ magnétique (27) du dispositif détecteur d'anomalie (26) est disposé sur le côté de la paroi métallique (25) éloigné du système d'aimants (19).

6. Transporteur selon une des revendications 1 à 5, **caractérisé par le fait que** le dispositif détecteur d'anomalie (26) comprend un capteur d'accélération (29).

7. Transporteur selon une des revendications 1 à 6, **caractérisé par le fait que** le dispositif détecteur d'anomalie (26) comporte plusieurs détecteurs (27, 29) disposés en différents emplacements le long d'une direction transversale à une direction (R) de transport du produit.

8. Transporteur selon une des revendications 1 à 7, **caractérisé par le fait que** le dispositif de traitement de signal (30) est agencé de manière telle que, sur la base d'un signal d'avertissement de fausse alarme (F) reçu par le dispositif détecteur d'anomalie (26), un signal (S) délivré par le système de détecteurs (21) du dispositif détecteur de métal (18) est corrigé.

9. Transporteur selon une des revendications 1 à 8, **caractérisé par le fait qu'**à la réception d'un signal d'avertissement de fausse alarme (F), le dispositif détecteur de métal (18) est temporairement désactivé ou la sensibilité du dispositif détecteur de métal (18) est temporairement diminuée.

10. Transporteur selon une des revendications 1 à 9, **caractérisé par le fait que** le dispositif détecteur d'anomalie (26) est relié à un dispositif émetteur de signal (5) aux fins, de délivrer le signal d'avertissement de fausse alarme (F) à un utilisateur.

11. Machine de récolte (1) équipée d'un transporteur (6) selon une des revendications 1 à 10.

12. Procédé de détection de particules métalliques dans un produit à transporter (G), selon lequel on déplace le produit à transporter (G) dans un champ magnétique de mesure (M), on détecte une variation du champ magnétique de mesure (M) à l'aide d'un système de détecteurs (21) et, en présence d'une variation du champ magnétique, on exploite le signal (S) émis par le système de détecteurs (21) aux fins de détecter une particule métallique dans le produit à transporter (G),
**caractérisé par le fait**
**qu'**à l'aide d'un dispositif détecteur d'anomalie (26), on détecte les variations de champ magnétique enregistrées par le système de détecteurs (21) qui ne sont pas causées par des particules métalliques dans le produit à transporter (G) et lors de la détection d'un événement perturbateur on délivre un signal d'avertissement de fausse alarme (F).

13. Procédé selon la revendication 12, **caractérisé par le fait que** comme événements perturbateurs on enregistre à l'aide d'un détecteur de champ magnétique (27) du dispositif détecteur d'anomalie (26) les variations de champ magnétique qui ne sont pas causées par la présence de particules métalliques dans le produit à transporter (G).

14. Procédé selon la revendication 12 ou 13, **caractérisé par le fait que** comme événements perturbateurs on enregistre les forces d'accélération apparaissant au niveau du système de détecteurs (21)..

15. Procédé selon une des revendications 12 à 14, **caractérisé par le fait que** sur la base du signal d'avertissement de fausse alarme (F) du dispositif détecteur d'anomalie (26), on corrige un signal (S) délivré par le système de détecteurs (21) du dispositif détecteur de métal (18).

16. Procédé selon une des revendications 12 à 15, **caractérisé par le fait que** lors de la réception d'un signal d'avertissement de fausse alarme (F) on désactive temporairement le dispositif détecteur de métal (18) ou on diminue temporairement la sensibilité du dispositif détecteur de métal (18).

17. Procédé selon une des revendications 12 à 16, **caractérisé par le fait que** le signal d'avertissement de fausse alarme (F) est délivré à un utilisateur.
